# EUROPÄISCHE PATENTANMELDUNG

(11) **EP 1 878 487 A2**
(43) Veröffentlichungstag der Anmeldung: **16.01.2008**
(21) Anmeldenummer: 07013553.8
(22) Anmeldetag: 11.07.2007
(51) Int. Cl.: B01D 65/04, B01D 65/08

(54) **Verfahren und Vorrichtung zum Verringern oder Verhindern des Zusetzens einer Membran**

(30) Priorität: 13.07.2006 DE 102006032647
(71) Anmelder: Westfalia Separator AG, 59302 Oelde (DE)
(72) Erfinder: Feuerpfeil, Hans-Peter, 73529 Schwäbisch Gmünd (DE); Bellido, Eduardo, 73432 Aalen (DE); Hamatschek, Jochen, Dr., 73773 Aichwald (DE); Olapinski, Hans, Dr., 73773 Aichwald (DE)
(74) Vertreter: Dr. Weitzel & Partner

(57) **Zusammenfassung**

Die Erfindung betrifft ein Verfahren zum Vermindern oder Verhindern des Zusetzens einer Membran zum Filtrieren einer Flüssigkeit, mit den folgenden Verfahrensschritten:
- die Flüssigkeit wird in einem Kreislauf geführt, in den eine Membraneinrichtung geschaltet ist, mit einer Membran, durch welche Permeat hindurchtritt;
- der Flüssigkeit werden Störpartikel zugeführt, die ein Aufwirbeln einer gebildeten oder sich in Bildung befindlichen Deckschicht (boundary layer) bewirken;
- als Flüssigkeit werden Getränke wie Wein, Bier, Wasser oder sonstige niederviskose Flüssigkeiten verwendet;
- die Störpartikel weisen eine Größe von < 10 µm auf.

## Beschreibung

Die Erfindung betrifft das Gebiet der Filtration von Flüssigkeiten mit einer Membran. Sie betrifft insbesondere das Gebiet der Filtration von Getränken wie Trinkwasser, Wein, Bier.

Ein bekanntes Problem bei der Anwendung von Membranen zur Filtration besteht darin, dass sich im Laufe der Zeit auf der Retentat-Seite der Membran Partikel ablagern, die zu groß sind, um durch die Membran hindurchtreten zu können. Diese Partikel bilden nach und nach eine Deckschicht, die zu einem Filterkuchen anwachsen kann und die den Durchsatz an Permeat und damit die Mengenleistung einer Filtrationsanlage verringert. Dabei kann die Membran in einem solchen Maße zugesetzt werden, dass der Durchsatz bis auf Null absinkt.

Es gibt eine Reihe von Möglichkeiten, die Leistung einer Membranfiltration durch Manipulation an der Deckschicht zu optimieren. Beispiele sind:
- die periodische Regenerierung der Membranoberfläche durch chemische Reinigung (Eliminierung des Schutzbelages an der Membranoberfläche)
- die periodische Regenerierung der Membranoberfläche durch das Durchströmen der Membran mit gereinigtem Filtrat (Permeat) entgegen der Filtrationsrichtung - periodische Rückspülung
- die kontinuierliche Membranregenerierung durch das Erzeugen hoher Turbulenz an der Membranoberfläche durch eine hohe Strömungsgeschwindigkeit der zu filtrierenden Flüssigkeit parallel zur Membranoberfläche. Hierbei werden Partikel, die sich an der Membranoberfläche abgesetzt haben, wieder in die strömende Flüssigkeit über der Membran zurückgeführt in den Bereich der Kernströmung
- das Vermindern der Konzentration an zu entfernenden Partikeln aus der Flüssigkeit vor dem Zuführen der Flüssigkeit zu dem Kreislauf, in welchem sich die Membran befindet, zum Beispiel durch Zentrifugieren oder durch sonstiges Vorklären.

Alle diese Maßnahmen haben nicht zum gewünschten Erfolg geführt. Die Maßnahmen sind umständlich und zeitaufwendig. Der Filtrationsprozess wird hierdurch unterbrochen, wodurch wiederum der Durchsatz der Anlage verringert wird.

Der Erfindung liegt die Aufgabe zugrunde, ein Verfahren und eine Vorrichtung anzugeben, womit das Zusetzen beziehungsweise Blockieren einer Membran bei der Flüssigkeitsfiltration verringert oder verhindert wird. Die Standzeit einer Membran-Filtrationsanlage bis zum Zusetzen soll somit gesteigert werden.

### Der Erfindung liegen folgende Überlegungen zugrunde:

Die Strömungsgeschwindigkeit der Flüssigkeit über der Membran - parallel zur Membranoberfläche - ist nicht konstant. Sie nimmt von der Mitte des Flüssigkeitsstromes zur Membranoberfläche hin ab, und ist an der Membranoberfläche gleich Null. Der Geschwindigkeitsgradient ist dort besonders hoch.

Die in der Strömung befindlichen Teilchen werden einerseits durch den Sog des Permeates, der durch die Membran hindurchtritt, zur Membranoberfläche hin geführt. Andererseits tritt jedoch auch eine Rückströmung auf, die zu einem Rücktransport von Teilchen zur Kernströmung hin führt.

Dieser Rücktransport ist besonders effektiv für größere Teilchen mit einer Teilchengröße von über 0,5 µm. Die Rückführkraft ist dabei proportional zur dritten Potenz des Teilchendurchmessers. Bei sehr kleinen Teilchen von unter 0,2 µm gilt dies kaum oder nicht.

Der Rücktransport solcher sehr kleiner Teilchen von der Membranoberfläche zur Kernströmung nimmt mit folgenden Parametern zu:
- geringe Teilchengröße
- geringe Dicke der Deckschicht
- geringe Viskosität der zu filtrierenden Flüssigkeit
- hohe Temperatur der zu filtrierenden Flüssigkeit.

Größere Partikel verhalten sich bezüglich des Rücktransportes jedoch anders, als kleine Partikel. Sie haben eine stärkere Tendenz, von der Membranoberfläche zur Kernströmung zurückzuwandern. Dies gilt insbesondere bei hohen Strömungsgeschwindigkeiten der Flüssigkeit parallel zur Membranoberfläche.

Kommt es zu einem solchen Rücktransport großer Teilchen, so führt dies zu einer Aufwirbelung oder Störung der Flüssigkeitsschicht, die sich in unmittelbarer Nähe der Membranoberfläche befindet, und damit auch der Deckschicht. Dies bewirkt auch eine Rückdiffusion der sehr kleinen Teilchen aus der Deckschicht in die Kernströmung.

Eine hohe Konzentration von Teilchen in der Größenordnung von zwischen 0,5 und 10 µm hat sich als hilfreich erwiesen. Sie führt zu guten Filterleistungen. Die Teilchen wirken als Störpartikel, die erheblich dazu beitragen, das Entstehen einer Deckschicht zu behindern oder gar zu verhindern.

Bei der Bemessung der Strömungsgeschwindigkeit der zu reinigenden Flüssigkeit durch die Membran hindurch ist folgendes zu beachten:

Diese Strömungsgeschwindigkeit darf nicht zu groß sein, da dann nur ein Rücktransport von Teilchen durch Diffusion erfolgt.

Die Strömungsgeschwindigkeit durch die Membran hindurch darf nicht zu groß sein, da sonst die Schleppwirkung der Permeatströmung durch die Membran hindurch größer ist, als die Kraft, die für den Rücktransport zur Kernströmung folgt (hier durch Diffusion). Die Teilchen lagern sich dann auf der Membranoberfläche ab und blockieren diese.

Werden die Filtrationsgeschwindigkeit und die Konzentration der zu entfernenden Partikel richtig gewählt (beispielsweise 0,001 Prozent), so kann eine zu filtrierende Volumenmenge von zum Beispiel 1000 m³ in einem Filtrations-Kreislauf von 100 I auf den 10000-fachen Wert der Ausgangskonzentration aufkonzentriert werden.

Eine ganz erhebliche Steigerung der Filtrationsgeschwindigkeit ist dann möglich, wenn eine zu filtrierende Flüssigkeit, die eine nur sehr kleine Menge partikelartiger Verunreinigungen aufweist, mit Störpartikeln einer bestimmten Größe versetzt wird.

Die Teilchengröße der Störpartikel ist hierbei so zu wählen, dass bei den gegebenen Filtrationsbedingungen - Überströmgeschwindigkeit, Viskosität und so weiter - keine Abrasion der Membran eintritt. Bei einer Überströmgeschwindigkeit von beispielsweise weniger als 2 m/s, einer Viskosität wie derjenigen von Wasser und bei Raumtemperatur sollte die Teilchengröße unter 10 µm liegen. Die Teilchengröße sollte ferner derart bemessen werden, dass die Kräfte der Rückströmung für diese Teilchen von der Membranoberfläche zur Kernströmung hin ausreichen. Bei Überströmgeschwindigkeiten parallel zur Membranoberfläche von 0,5 bis 2 m/s hat sich eine Größe der Störpartikel bei 0,5 bis 2 µm als besonders günstig erwiesen.

Bei entsprechenden Bedingungen - zu filtrierendes Medium, richtige Wahl der Überströmgeschwindigkeit, richtige Auswahl von Größe und Konzentration der Störpartikel - lassen sich Leistungssteigerungen des Filtrationsprozesses von 30 bis über 100 Prozent erzielen, verglichen mit konventionellen Verfahren ohne Zusatz von Störpartikeln.

In zahlreichen Experimenten konnte nachgewiesen werden, dass die Störung und Aufwirbelung der Deckschicht durch Einführen von Störpartikeln sehr wirkungsvoll ist.

Bei Flüssigkeiten mit nur sehr geringer Feststoffkonzentration ist es möglich, den Filtrationskreislauf eine bestimmte Menge an Störpartikeln zuzugeben, am besten zu Beginn des Filtrationsprozesses. Die Menge der Störpartikel bleibt während des gesamten Filtrationsprozesses konstant.

Die Erfindung lässt sich besonders vorteilhaft dann anwenden, wenn es um das Filtrieren niederviskoser Flüssigkeit mit sehr geringer Konzentration an partikelförmigen Bestandteilen geht, wie zum Beispiel kolloidale Partikel, Schmutz, Bakterien, Viren.

Weiterhin ist die Vorbehandlung der zu filtrierenden Flüssigkeit mittels anderer Trennverfahren vorteilhaft, zum Beispiel mit Dekantern oder Zentrifugen.

Die mit einem Membran-Filtrationsverfahren abzutrennenden Teilchen haben eine Größe, die im allgemeinen zwischen 0,01 und 10 µm liegt. Nach einer Vorbehandlung, zum Beispiel durch Zentrifugieren, ist der Anteil der Teilchen mit einem Durchmesser von ca. 1 µm oder darüber stark reduziert. Die erfindungsgemäßen Störpartikel sollten möglichst eine Größe haben, die oberhalb des Bereiches der kolloidalen Teilchen (0,01 bis 0,5 µm) liegt. Günstig sind 0,5 bis 5, 0,3 bis 3 oder 1 bis 2 µm. Auch Partikelgrößen von 2 bis 10 µm sind günstig, beispielsweise 2, 5, 7 µm und so weiter. Die Störpartikel können größer sein, als die abzutrennenden Teilchen der zu filtrierenden Flüssigkeit.

Ferner sollten die folgenden Bedingungen bezüglich der Störpartikel erfüllt sein:

Die Störpartikel sollten von runder Gestalt sein, beispielsweise kugelig oder nach Art eines Ellipsoids. Die Störpartikel können auch kantig oder polygonal sein.

Jedoch sind Plättchenstrukturen zu vermeiden, da hierdurch die Oberfläche der Membran zugesetzt beziehungsweise blockiert wird.

Die Oberfläche der Störpartikel kann durchaus rau oder splitterförmig oder kantig sein. Die Störpartikel sollten jedoch nicht abrasiv sein, um einen Verschleiß der Membran zu vermeiden.

Als Material kommt jeglicher Werkstoff in Betracht, der in Bezug auf die zu filtrierende Flüssigkeit unbedenklich ist und zum Beispiel die Zulassung für Lebensmittel hat. Hier kommen insbesondere die folgenden Stoffe in Betracht: Al₂O₃, TiO₂, ZrO₂, und so weiter.

Am besten bestehen die Störpartikel aus demselben Material, aus dem die Membran besteht.

Die Störpartikel könnten in der zu filtrierenden Flüssigkeit in einer Dosierung zugegeben werden, dass sie mit einer Konzentration von unter einem Gewichtsprozent in der Flüssigkeit vorliegen, beispielsweise 0,5, 0,2, 0,1, 0,05, 0,02 Gewichtsprozent.

Bei höherviskosen, zu filtrierenden Flüssigkeiten können die Verhältnisse anders sein. So hat es sich gezeigt, dass die Konzentration und/oder Größe der Störpartikel erhöht werden müssen, um im Sinne der Erfindung zu wirken. Beispielsweise werden gute Ergebnisse bei der Abtrennung von Kolloiden aus Speiseöl durch Zugabe von Al₂O₃-Teilchen in einer Größe von 5 bis 20 µm, bevorzugt 10 bis 15 µm in einer Konzentration von 2 bis 3 % bezogen auf die im Kreislauf befindliche Flüssigkeitsmenge erzielt.

Die Erfindung und der Stand der Technik sind anhand der Zeichnung näher erläutert. Darin ist im einzelnen folgendes dargestellt:
- Figur 1: veranschaulicht in schematischer Darstellung eine bekannte Filtrationsanlage mit Membran.
- Figur 2: zeigt ebenfalls schematisch einen rohrförmigen Membrankörper mit Darstellung der darin strömenden Partikel, wiederum gemäß dem Stand der Technik.
- Figur 3: zeigt schematisch eine erste Membran-Filtrationsanlage gemäß der Erfindung.
- Figur 4: zeigt schematisch eine zweite Membran-Filtrationsanlage gemäß der Erfindung.
- Figur 5: ist eine Tabelle, die den Zusammenhang zwischen Größe und Gestalt der Störpartikel einerseits sowie der Reinigungs- und Abrasionswirkung andererseits darstellt.

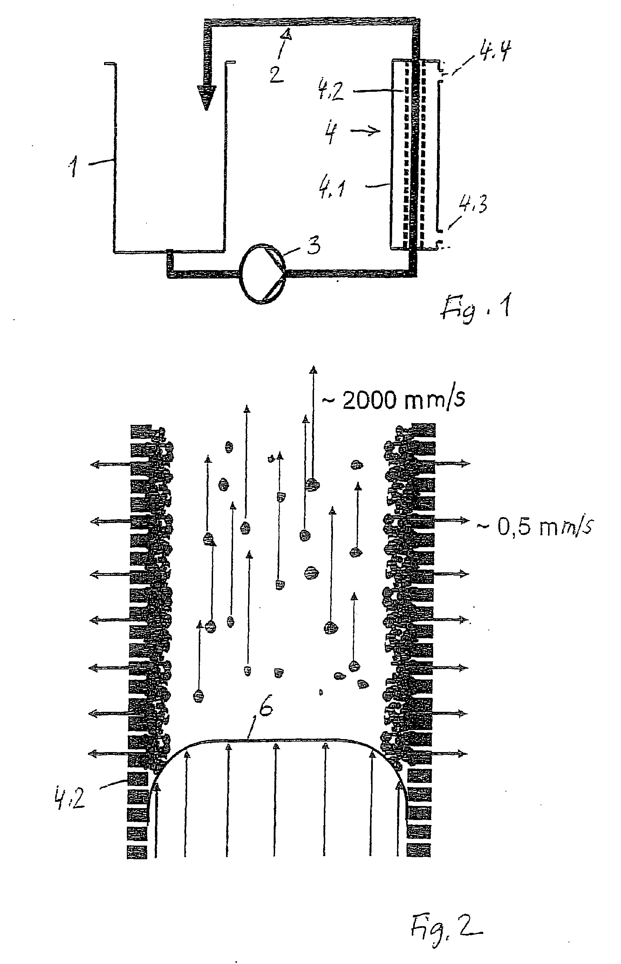

Die in Figur 1 gezeigte Membran-Filtrationsanlage gemäß dem Stande der Technik umfasst einen Vorratsbehälter 1, in dem sich zu filtrierende Flüssigkeit befindet, ein Leitungssystem 2, eine Pumpe 3 sowie eine Membraneinrichtung 4. Die Membraneinrichtung 4 umfasst ein Rohr 4.1, eine hierzu konzentrische und somit zylindrische Membran 4.2, einen Auslass 4.3 und einen Auslass 4.4, beide für Permeat. Die zu filtrierende Flüssigkeit läuft im Leitungssystem 2 um. Die Feststoffkonzentration steigt im Filtrationskreislauf in dem Maße an, wie partikelfreies Permeat den Filtrationskreislauf über die Membran verlässt.

Figur 2 veranschaulicht in schematisch und in stark vergrößerter Darstellung eine Membran 4.2 von zylindrischer Gestalt. Die zu filtrierende Flüssigkeit bewegt sich hierbei in Längsrichtung. Die Geschwindigkeit der Strömung in Richtung der Längsachse der Membran 4.2 kann beispielsweise in der Größenordnung von 1 bis 6 m/s, zum Beispiel 2 m/s = 2000 mm/s liegen. Im Bereich der Membranoberfläche 4.2 nimmt die Strömungsgeschwindigkeit bis auf annähernd Null ab - siehe das Strömungsprofil 6.

Durch die Schleppwirkung der Filtratströmung findet eine Wanderung von Partikeln zur Membranfläche hin statt. Die Partikel lagern sich an der Innenfläche an und wachsen im Laufe der Zeit zu einem Filterkuchen an, was nachteilig ist.

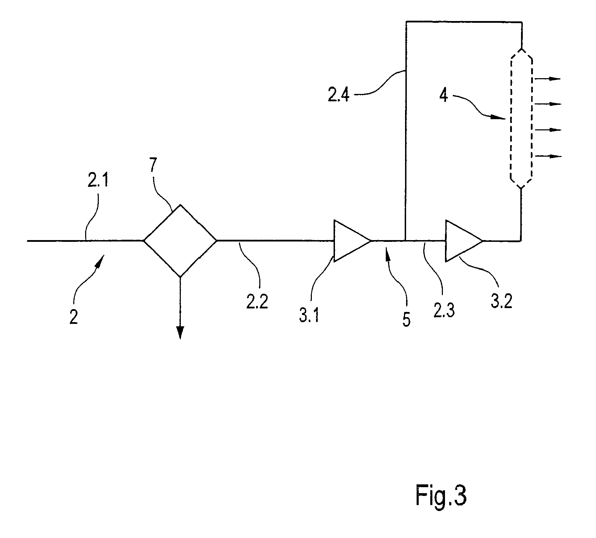

Bei der in Figur 3 gezeigten Anlage ist die Erfindung verwirklicht. Man erkennt hierbei wiederum ein Leitungssystem 2 mit einem ersten Leitungsabschnitt 2.1, einem zweiten Leitungsabschnitt 2.2, einem dritten Leitungsabschnitt 2.3 und einem vierten Leitungsabschnitt 2.4. In den vierten Leitungsabschnitt 2.4 ist eine Membraneinrichtung 4 geschaltet.

In einer Vorklärungseinheit 7 werden der zu filtrierenden Flüssigkeit (mit Feststoffkonzentration C1) Schmutzpartikel entzogen, die konzentriert anfallen. Leitungsabschnitt 2.2 führt demgemäß eine vorgeklärte Flüssigkeit (Feststoffkonzentration << C1).

Zwischen Leitungsabschnitt 2.2 und Leitungsabschnitt 2.3 ist eine erste Pumpe (Speisepumpe) 3.1 geschaltet. Es folgt eine zweite Pumpe 3.2, die für die Strömung im Filtrationskreislauf (Loop) sorgt.

Der dritte Leitungsabschnitt 2.3 weist einen Einlass 5 zum Einleiten von Störpartikeln auf. Die Störpartikel können in jeglicher Form eingeleitet werden, beispielsweise pulverförmig, aber besser noch in suspendierter Form. Als Suspensionsbasis kann dabei die zu reinigende Flüssigkeit selbst dienen. Die Menge der zu dosierenden Störpartikel kann zum Beispiel 0,01 Volumenprozent betragen, bezogen auf das Umlaufvolumen in Leitungsabschnitt 2.4 (Filtrationskreislauf oder Loop). Abweichungen nach oben bis beispielsweise 1,0 Volumenprozent und mehr sind möglich, aber auch nach unten bis beispielsweise 0,001 Volumenprozent.

Als Material kommt zum Beispiel Aluminiumoxid in Betracht. Die Partikelgröße könnte 0,1 bis 2 µm betragen, beispielsweise 0,5, 0,6, 0,7, 0,8, 0,9 µm. Die Wahl der Teilchengröße stellt einen Kompromiss zwischen der gewünschten Wirkung und der abrasiven Wirkung dieser Teilchen dar.

Die Zugabe erfolgt jeweils beim Filtrationsstart. Die Partikel verbleiben im Leitungsabschnitt 2.4 bis zu dessen Reinigung (konstante Störpartikelkonzentration).

Die Konzentration der Schmutzpartikel in der vorgeklärten Flüssigkeit mit Feststoffkonzentration << C1 steigt mit Entnahme von partikelfreiem Filtrat aus dem Filtrationskreislauf an.

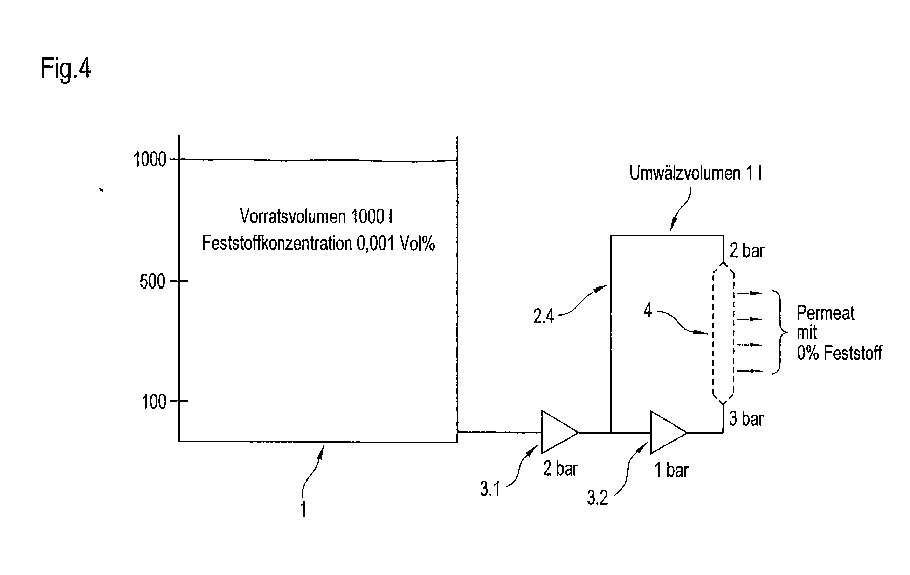

Die in Figur 4 dargestellte Anlage umfasst wiederum einen Vorratsbehälter 1 mit einem Leitungsabschnitt 2.4, in welchem ein Volumen der zu filtrierenden Flüssigkeit umgewälzt wird. In diesem Leitungsabschnitt ist wiederum eine Membraneinrichtung 4 geschaltet. Man erkennt eine erste Pumpe 3.1 und eine zweite Pumpe 3.2.

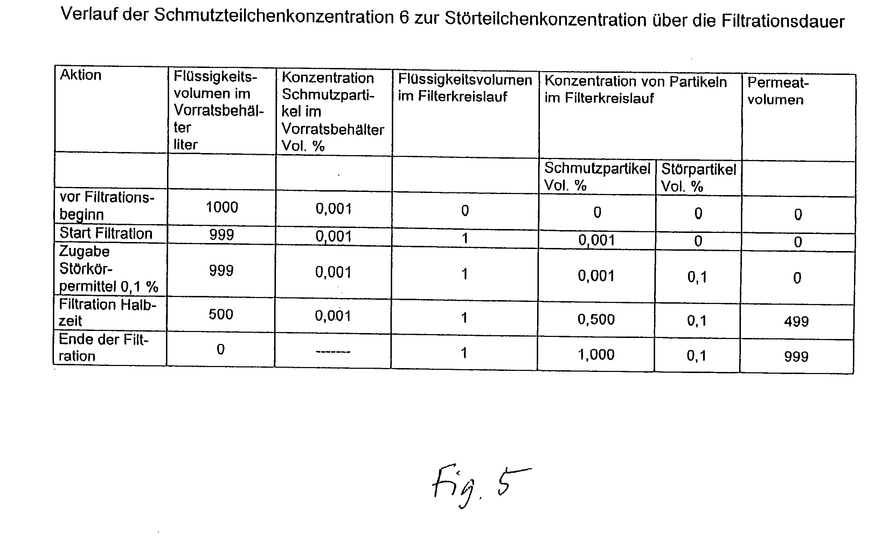

Der ersten Pumpe 3.1 ist eine Dosiereinrichtung zum Zudosieren von Störpartikeln vorgeschaltet. In diesem Beispiel enthält die zu filtrierende Flüssigkeit nur einen geringen Feststoffanteil. Die zugehörende Tabelle - Figur 5 - veranschaulicht die Verhältnisse von Schmutzpartikelkonzentration und Störpartikelkonzentration über der Dauer der Filtration im Membrankreislauf.

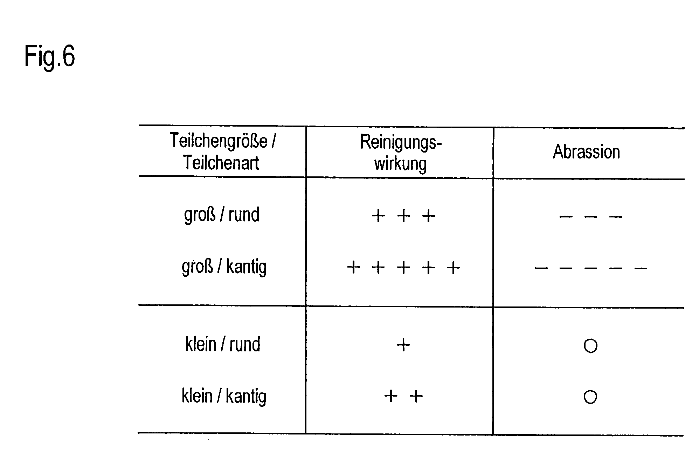

Die in Figur 6 gezeigte Tabelle veranschaulicht den Zusammenhang zwischen der Teilchengröße und Teilchenart, der Reinigungswirkung und der Abrasionswirkung an der Membran.

Beim erfindungsgemäßen Prozess kommen alle denkbaren Materialien als Membranmaterialien in Betracht, beispielsweise Keramik oder Polymer oder andere Materialien.

Das erfindungsgemäße Verfahren ist besonders geeignet für die Filtration von Flüssigkeiten mit einem hohen Anteil kolloidaler Partikel, zum Beispiel Wein oder Bier. Dabei haben die kolloidalen Partikel einen Anteil von 50 Prozent oder mehr, bezogen auf die Gesamtmenge der heraus zu filtrierenden Partikel.

Ganz besonders gut eignen sich zahlreiche niederviskose Flüssigkeiten, deren Grobpartikel-Anteil durch eine Vorklärung bereits weitgehend reduziert/eliminiert ist. Zur Vorklärung eignet sich besonders gut eine Zentrifugaleinrichtung. Hiermit lassen sich bevorzugt große Schmutzpartikel abscheiden, die den erfindungsgemäßen Prozess stören würden.

Der Anschluss zum Einleiten von Störpartikeln in den Kreislauf 2.4 kann an irgendeiner Stelle des Kreislaufes vorgesehen sein. Wesentlich ist nur, dass die Störpartikel in den Kreislauf und damit in die umgewälzte Flüssigkeit eingeleitet wird.

Die Erfindung hat sich im Laborversuch als äußerst wirkungsvoll erwiesen. Versuche haben gezeigt, dass bei einer bestehenden Anlage bei der Filtration von Wein eine Steigerung des Permeat-Durchsatzes von 50 Prozent und mehr erzielt werden konnte. Dies bedeutet, dass bei einem gegebenen Anwendungsfall Anlagen kleiner ausgelegt werden können, und somit in erheblichen Masse Kosten eingespart werden. Die Erfindung ist somit von großem wirtschaftlichen Wert.

Es hat sich gezeigt, dass die Zugabe von Störpartikeln bei allen Cross-Flow-Systemen funktioniert, somit bei Systemen bei denen das zu filtrierende Medium entlang der Membran (zum Beispiel Röhren, Spiralwickel- oder Flachmembranen) gepumpt wird, ebenso zur Leistungserhöhung führt, wie bei Systemen, bei denen die Membran im zu filtrierenden Medium bewegt wird (wie beispielsweise im Patent AT 406936 - Figur 1 sowie im US-Patent 5,679,249).

### Bezugszeichenliste

- 1: Vorratsbehälter
- 2: Leitungssystem
- 2.1: erster Leitungsabschnitt
- 2.2: zweiter Leitungsabschnitt
- 2.3: dritter Leitungsabschnitt
- 2.4: vierter Leitungsabschnitt
- 3: Pumpe
- 3.1: Pumpe
- 3.2: Pumpe
- 4: Membraneinrichtung
- 4.1: Rohr
- 4.2: Membran
- 4.3: Auslass
- 4.4: Auslass
- 5: Anschluss zum Einführen von Störpartikeln
- 6: Strömungsprofil
- 7: Vorklärungseinheit

## Patentansprüche

1. Verfahren zum Vermindern oder Verhindern des Zusetzens einer Membran (4.2) zum Filtrieren einer Flüssigkeit, mit den folgenden Verfahrensschritten:
1.1 die Flüssigkeit wird in einem Kreislauf geführt, in den eine Membraneinrichtung (4) geschaltet ist, mit einer Membran (4.2), durch welche Permeat hindurchtritt;
1.2 der Flüssigkeit werden Störpartikel zugeführt, die ein Aufwirbeln einer gebildeten oder sich in Bildung befindlichen Deckschicht (boundary layer) bewirken;
1.3 als Flüssigkeit werden Getränke wie Wein, Bier, Wasser oder sonstige niederviskose Flüssigkeiten verwendet;
1.4 die Störpartikel weisen eine Größe von < 10 µm auf.

2. Verfahren nach Anspruch 1, **dadurch gekennzeichnet, dass** die Störpartikel eine Größe von 0,05 bis 10 µm aufweisen.

3. Verfahren nach Anspruch 1, **dadurch gekennzeichnet, dass** die Störpartikel eine Größe von 0,1 bis 5,0 µm aufweisen.

4. Verfahren nach Anspruch 1, **dadurch gekennzeichnet, dass** die Störpartikel eine Größe von 0,5 bis 3 µm aufweisen.

5. Verfahren nach Anspruch 1, **dadurch gekennzeichnet, dass** die Störpartikel eine Größe von 1 bis 2 µm aufweisen.

6. Verfahren nach einem der Ansprüche 1 bis 5, **dadurch gekennzeichnet, dass** die Störpartikel am Anfang oder während des Filtrationsprozesses der zu filtrierenden Flüssigkeit zugegeben werden.

7. Verfahren nach einem der Ansprüche 1 bis 6, **dadurch gekennzeichnet, dass** die Störpartikel in einer Konzentration von weniger als 1 oder weniger als 0,2 oder weniger als 0,1 Volumenprozent der Flüssigkeit zugeführt werden, bezogen auf die in Umlauf befindliche Flüssigkeitsmenge.

8. Verfahren nach einem der Ansprüche 1 bis 7, **dadurch gekennzeichnet, dass** die Störpartikel von rundlicher oder kantiger oder polygonaler Gestalt sind.

9. Verfahren nach einem der Ansprüche 1 bis 8, **dadurch gekennzeichnet, dass** das Material der Störpartikel gegenüber der zu filtrierenden Flüssigkeit inert ist.

10. Verfahren nach einem der Ansprüche 1 bis 9 **dadurch gekennzeichnet, dass** die Störpartikel aus Al₂O₃ oder TiO₂ oder ZrO₂ oder aus demselben Material wie die Membran selbst bestehen.

11. Verfahren nach einem der Ansprüche 1 bis 10, **dadurch gekennzeichnet, dass** als Membranmaterial Polymer oder Keramik oder ein anderes Material verwendet wird.

12. Verfahren nach einem der Ansprüche 1 bis 11, **dadurch gekennzeichnet, dass** dem Membranprozess im Kreislauf eine Vorklärung der Flüssigkeit vorgeschaltet wird, beispielsweise durch ein Zentrifugieren.

13. Anlage zum Filtrieren einer Flüssigkeit mit einer Membraneinrichtung (4) mit einem Leitungssystem (2), das zusammen mit der Membraneinrichtung (4) einen Kreislauf (2.4) zum Umwälzen der zu filtrierenden Flüssigkeit bildet, **dadurch gekennzeichnet, dass** der Kreislauf (2.4) einen Anschluss (5) zum Einleiten von Störpartikeln aufweist.

14. Anlage nach Anspruch 13, **dadurch gekennzeichnet, dass** die Membran eine röhrenförmige oder scheibenförmige oder sonstige Gestalt hat.

15. Verfahren nach Anspruch 14, **dadurch gekennzeichnet, dass** die Überströmung der Membran parallel zur Membranoberfläche durch die Bewegung der Membran selbst im Medium bewirkt wird, beispielsweise durch Rotation oder Vibration der Membran.
